# EUROPEAN PATENT APPLICATION

(11) **EP 3 229 356 A1**
(43) Date of publication of application: **11.10.2017**
(21) Application number: 16163940.6
(22) Date of filing: 05.04.2016
(51) Int. Cl.: H02M 1/32, H02H 3/02, H02H 7/125

(54) **POWER SUPPLY COMPRISING MOSFET-BASED CROWBAR CIRCUIT**

(71) Applicant: ABB Schweiz AG, 5400 Baden (CH)
(72) Inventor: Li, Haoran, 32427 Minden (DE)
(74) Representative: Marks, Frank

(57) **Abstract**

A Power supply (10) and a method for operating a power supply (10) are proposed. The power supply (10) comprises an AC voltage source (12), a rectifier device (14) for providing a main DC voltage (U0) via a supply line (16) to a load (18), and a safety circuitry (20) for disrupting the supply line (16), wherein the safety circuitry (20) comprises a fuse (22) arranged in the supply line (16), a converter device (24), a crowbar device (26) with a MOSFET switch (28), and a trigger device (30) for detecting an over-power in the supply line (16) and for triggering the crowbar device (26). Therein, the converter device (24) is adapted for converting an AC voltage to a DC control voltage (UC) for keeping the MOSFET switch (28) in an on-state, such that the supply line (16) is grounded and the fuse (22) is blown.

## Description

### Field of the invention

The invention relates to the field of power supplies. In particular, the invention relates to a DC power supply for supplying a DC voltage to a load and to a method for operating a power supply.

### Background of the invention

In order to protect a load supplied with electrical power by means of a power supply against a potentially damaging electrical over-power, the power supply may comprise a so-called crowbar circuit and/or a crowbar device. Such crowbar device may generally be adapted for short-circuiting and/or grounding a supply line of the power supply, via which the load is supplied, in case an over-power occurs. By quickly purging electrical power via the crowbar device, a current flow through a fuse arranged in the supply line may be rapidly increased to trip and/or blow the fuse in order to disrupt the supply line and to comprehensively protect the load against the over-power.

For this purpose, the crowbar device usually comprises a thyristor as a switch element, which may be triggered and/or switched to an on-state by means of a trigger circuit and/or a trigger device of the power supply.

### Description of the invention

It is an objective of the present invention to provide a cost-effective power supply with comprehensive safety function and low power dissipation, especially for intainsically safe circuits.

This objective is achieved by the subject-matter of the independent claims. Further exemplary embodiments are evident from the dependent claims and the following description.

An aspect of the present invention relates to a power supply. The power supply may refer to a low-voltage power supply inclusive DC/DC convertor, and it may be adapted for supplying direct current (DC) and/or direct voltage (DC voltage) to a load, such as an electrical load. A voltage supplied by the power supply may be in the order of e.g. several tens of volts.

According to an embodiment of the invention, the power supply comprises an AC voltage source and a rectifier device connected to the AC voltage source and to a supply line. The rectifier device is adapted for converting an AC voltage to a main DC voltage for supplying a load via the supply line. The power supply further comprises a safety circuitry for disrupting the supply line and/or for disrupting a flow of electrical power in the supply line. Therein, the safety circuitry comprises a fuse arranged in the supply line, a converter device and a crowbar device with a MOSFET switch (metal-oxide-semiconductor field-effect-transistor switch) for grounding the supply line. The safety circuitry further comprises a trigger device for detecting an over-power in the supply line and for triggering the crowbar device when an over-power is detected. In other words, the trigger device may be adapted for triggering the crowbar device in case of a detected over-power in the supply line and/or upon detecting an over-power. Therein, the converter device is connected to the AC voltage source and adapted for converting an AC voltage to a DC control voltage for keeping the MOSFET switch in an on-state when triggered by the trigger device, such that the supply line is grounded and the fuse is blown and/or tripped.

Here and in the following, the term "AC voltage" may refer to an alternating voltage, and the term "DC voltage" may refer to a direct voltage. The term "over-power" may refer to an over-voltage and/or an over-current flowing through the supply line of the power supply. Further, the term "grounding the supply line" may refer to connecting the supply line to a ground potential and/or to short-circuiting the supply line.

Moreover, the DC control voltage may refer to a gate-to-source voltage applied to a gate terminal of the MOSFET switch and/or applied between the gate terminal and a source terminal of the MOSFET switch to keep the MOSFET switch in the on-state, in which on-state a conduction path between a drain terminal and the source terminal of the MOSFET switch may be provided.

Further, the term "triggering the crowbar device" may refer to switching the MOSFET switch of the crowbar device to the on-state by applying an appropriate voltage to the gate terminal of the MOSFET switch. Accordingly, the trigger device may be adapted for generating an electrical trigger signal when an over-power is detected, which trigger signal may switch the MOSFET switch to the on-state. Alternatively or additionally "triggering the crowbar device" may refer to switching and/or actuating a further switch element in order to connect the MOSFET switch to the converter device.

The "supply line" may refer to any electrically conductive line, such as e.g. a cable, a wire and/or a rail.

The inventive power supply may be considered as being based on the following considerations. Conventional crowbar devices usually utilize a thyristor, in particular for high-power applications above about 600 A to 800 A, wherein a junction temperature may be below about 125°C. When the thyristor is switched to an on-state during a failure case, such as a detected over-power, and the electrical power is purged via the thyristor, a considerable amount of heat may be generated. Therefore, such thyristor-based crowbar devices may require a big housing for dissipation of heat. Accordingly, thyristor-based crowbar devices may not be suitable for high integrity and low-power design applications. However, once triggered, the thyristor remains in the on-state until the electrical power is reduced to a harmless level and the fuse is blown to disrupt the supply line. Replacing the thyristor by a transistor or a MOSFET may require a base current or a gate voltage being supplied to a base terminal of the transistor or a gate terminal of the MOSFET, respectively, in order to keep the transistor or the MOSFET in an on-state during a failure case and for quickly purging excessive electrical energy and blowing the fuse. Considering a fuse with a current rating of 100 mA, a minimum voltage 0.7 V for the transistor or 3 V for the MOSFET, a safe coefficient of 1.7 and an intrinsically safe (IS) coefficient of 1.5 as stated in IEC610079-11 and IEC610079-15 for intrinsically safety requirements, a power dissipation of the transistor may be about 0.178 W and of the MOSFET about 0.765 W. These amounts of power dissipation may be rather high for low-power applications, and for dissipating the amounts of power a big housing and/or additional space on a printed circuit board (PCB) may be required.

By utilizing the AC voltage supplied by the AC voltage source, converting it to the DC control voltage by means of the converter device and supplying it to the MOSFET switch to keep it in the on-state when an over-power is detected, the power dissipation of the MOSFET switch may be advantageously reduced. Further, a cost-effective and low-power consumption MOSFET switch with high drain-to-source current may be utilized for the safety circuitry. Also a rather compact MOSFET switch may be used, which may advantageously save space, e.g. on a printed circuit board, and in turn may improve heat dissipation.

A further aspect of the invention relates to a method for operating a power supply, in particular a method for safely operating a power supply in terms of protecting a load connected to the power supply against over-power.

It has to be understood that features of the method as described in the above and in the following may be features of the power supply as described in the above and in the following. Vice versa, features of the power supply as described in the above and in the following may be features of the method.

According to an embodiment of the invention, the converter device comprises a rectifier module for converting an AC voltage from the AC voltage source to the DC control voltage. By means of the rectifier module it may be ensured that the MOSFET switch may be reliably kept in the on-state when an over-power is detected. The rectifier module may comprise at least one diode and/or at least one capacitor. The rectifier module may be a half-wave or a full-wave rectifier.

According to an embodiment of the invention, the converter device comprises a filter element for smoothing the DC control voltage. The filter element may ensure that the DC control voltage is stable and/or constant.

According to an embodiment of the invention, the converter device comprises a charge pump circuit. Utilizing a charge pump circuit may advantageously allow to convert both a positive and a negative half-cycle of an AC voltage from the AC voltage source to generate the DC control voltage. A "half-cycle" may refer to a pulse and/or semi-period and/or semi-cycle of the AC voltage having a certain polarity. Further, using both the positive and negative half-cycles of the AC voltage may allow to provide a rather stable and/or constant DC control voltage after the crowbar device is triggered.

According to an embodiment of the invention, for generating the DC control voltage, the converter device is adapted for converting a negative half-cycle and/or a positive half-cycle of an AC voltage provided by the AC voltage source. Using both half-cycles may ensure that the electrical energy required for keeping the MOSFET switch in the on-state, may reliably be provided and/or supplied by the converter device.

According to an embodiment of the invention, the converter device is adapted for supplying the DC control voltage to a gate terminal of the MOSFET switch. This way, the MOSFET switch may be switched to the on-state and/or actuated bay means of the DC control voltage, such that a conduction path from drain to source terminal of the MOSFET switch is provided.

According to an embodiment of the invention, the AC voltage source is a common voltage source for supplying an AC voltage to the rectifier device and to the converter device. Generating both the main DC voltage and DC control voltage from the AC voltage source may reduce a complexity as well as costs of the power supply, and it may allow a compact design of the entire power supply.

According to an embodiment of the invention, the AC voltage source comprises a transformer. The transformer may serve to reduce a power and/or voltage from a supply grid.

According to an embodiment of the invention, the converter device and/or the rectifier device is connected to a secondary winding of the transformer. The converter device and/or the rectifier device may be connected to an output terminal and/or a tap of the secondary winding. The converter device and the rectifier device may be connected to a common output terminal or a separate terminal for each of the devices.

According to an embodiment of the invention, the rectifier device comprises a half bridge module and/or a full bridge module. The half bridge and/or full bridge module may provide a compact and reliable circuit for rectifying an AC voltage from the AC voltage source.

According to an embodiment of the invention, the rectifier device comprises a filter device for smoothing the main DC voltage. Using the filter device a rather stable and/or constant main DC voltage may be generated by means of the rectifier device.

According to an embodiment of the invention, the trigger device comprises an over-voltage detection device, an over-current detection device, and/or an over-heat detection device. The trigger device may for this purpose comprise e.g. a voltage sensor element, a current sensor element and/or a temperature sensor element in order to reliably detect an over-power and trigger the crowbar device in response.

According to an embodiment of the invention, the trigger device comprises an over-voltage detection device, wherein the over-voltage detection device comprises a voltage reference device and/or at least one Zener diode. The voltage reference device may for instance refer to a shunt voltage reference and/or an adjustable shunt regulator, such as e.g. a TL431, TLV431 and the like. By means of the voltage reference device and/or the at least one Zener diode a certain trigger level of a voltage may be set, such that the crowbar device may be triggered in case a voltage in the power supply and/or the supply line reaches and/or exceeds this trigger level. This may in turn allow to adapt and/or adjust the power supply to requirements and/or specifications of the load connected to the power supply.

According to an embodiment of the invention, the trigger device comprises a latch-circuit. A latch circuit is a flip-flop (RS flip-flop, Type-D flip-flop or equivalent).

According to an embodiment of the invention, the trigger device comprises at least two transistors. The transistors may e.g. be connected in series with respect to each other, wherein for instance a collector terminal of a first transistor may be connected to a base terminal of a second transistor such that, when switched on, the second transistor may pull down and/or reduce a base voltage of the first transistor to continuously switch on to be a latch function.

A further aspect of the invention relates to a method for operating a power supply. The method comprises converting, by means of a rectifier device, an AC voltage from an AC voltage source to a main DC voltage, and supplying the main DC voltage via a supply line of the power supply to a load. The method further comprises detecting, by means of a trigger device, an over power, e.g. an over-power in the supply line, and generating a trigger signal for triggering a crowbar device comprising a MOSFET switch. The method further comprises converting an AC voltage from the voltage source to a DC control voltage and supplying the DC control voltage to a gate terminal of the MOSFET switch, thereby connecting the supply line to a ground potential. By supplying the DC control voltage to the gate terminal of the MOSFET switch, the MOSFET switch may be kept in an on-state, thereby providing a conduction path and connecting the supply line to a ground potential, such that a current flow through a fuse arranged in the supply line may be increased and the fuse may be blown and/or tripped in order to protect the load against the over-power. Accordingly, the method may further comprise the steps of connecting the supply line to ground potential and/or blowing the fuse.

If technically possible but not explicitly mentioned, also combinations of embodiments of the invention described in the above and in the following may be embodiments of the method and the power supply.

These and other aspects of the invention will be apparent from and elucidated with reference to the embodiments described hereinafter.

### Brief description of the drawings

The subject matter of the invention will be explained in more detail in the following text with reference to exemplary embodiments which are illustrated in the attached drawings.
Fig. 1 schematically illustrates a function of a crowbar device.
Fig. 2 schematically shows a functional diagram of a power supply according to an embodiment of the invention.
Fig. 3 schematically shows a functional diagram of a power supply according to another embodiment of the invention.
Figs. 4A and 4B illustrate a working performance of the power supply of Fig. 3.
Fig. 5 shows a flow chart illustrating steps of a method for operating a power supply according to an embodiment of the invention.

The reference symbols used in the drawings, and their meanings, are listed in summary form in the list of reference symbols. In principle, identical parts are provided with the same reference symbols in the figures.

### Detailed description of exemplary embodiments

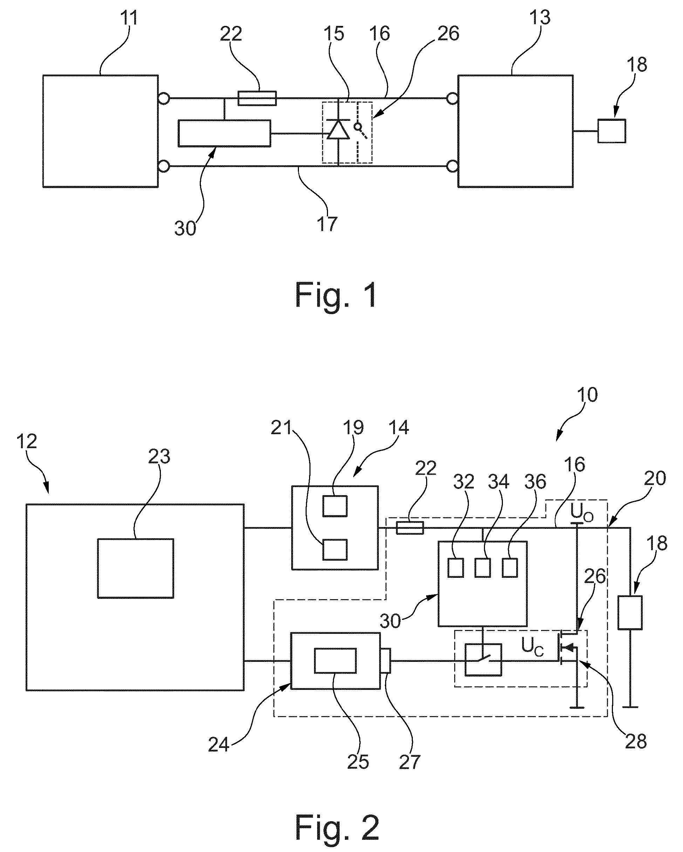

Fig.1 schematically illustrates a function of a crowbar device **26.** The crowbar device **26** is arranged between an input terminal **11** and an output terminal **13.** Input terminal **11** and output terminal **13** may e.g. refer to terminals of a power supply. The input terminal **11** may carry and/or supply an electrical input power, and via the output terminal **13** an electrical output power is supplied e.g. to a load **18.**

If and/or when the input power exceeds a certain threshold, a trigger device **30** detects the occurrence of an over-power in the supply line **16** and triggers a switch element **15** of the crowbar device **26.** The switch element **15** may for instance comprise a thyristor, which is switched to an on-state by means of the trigger device **30** and/or by means of an electrical trigger signal generated by the trigger device **30.** During such failure case, i.e. in case an over-power is detected, the crowbar device **26** short-circuits and/or grounds the supply line **16** by connecting the supply line **16** to a further electrical line **17** being on ground potential. This way, a current flow from the supply line **16** to the further electrical line **17** is rapidly increased, thereby tripping and/or blowing a fuse **22** arranged in the supply line **16** to disrupt the supply line **16** and/or to disrupt a current flow through the supply line **16** in order to comprehensively protect any load and/or circuit connected to the output terminal **13** on an output side. The switch element **15** usually is a non-recovering triggered switch, and therefore should withstand a considerably high power until the fuse **22** is tripped.

Fig. 2 schematically shows a functional diagram of a power supply **10** according to an embodiment of the invention.

The power supply **10** comprises an AC voltage source **12** and a rectifier device **14** arranged between the AC voltage source **12** and a supply line **16.** Accordingly, the rectifier device **14** is connected to the AC voltage source **12** and to the supply line **16.** The rectifier device **14** may correspond to a main power rectify net.

The AC voltage source **12** comprises a transformer **23** and the rectifier device **14** is connected to a secondary winding of the transformer **23.** The rectifier device **14** may for instance be connected to a terminal and/or a tap of transformer **23.** However, the AC voltage source **12** may be any other suitable AC voltage source providing an AC voltage.

The rectifier device **14** is adapted for converting an AC voltage from the AC voltage source **12** to a main DC voltage **U₀** supplied via supply line **16** to a load **18.** For this purpose, the rectifier device **14** comprises a bridge module **19,** such as a full bridge module **19** and/or a half bridge module **19.** The rectifier device **14** may further comprise a filter device **21** for smoothing the main DC voltage **U₀** and for providing a rather constant voltage.

The power supply **10** further comprises a safety circuitry **20** for disrupting the supply line **16** and/or for protecting the load **18** against electrical over-power.

The safety circuitry **20** comprises fuse **22** arranged in the supply line **16** and a converter device **24** adapted for converting an AC voltage from the AC voltage supply **12** to a DC control voltage **U_{c}.** For this purpose, the converter device **24** comprises a rectifier module **25,** which may e.g. comprise at least one diode and/or at least one capacitor. The converter device **24** may further comprise a filter element **27** for smoothing the DC control voltage **U_{c}.** The converter device **24** is connected to the AC voltage source **12.** Thus, AC voltage source **12** is a common voltage source **12** for the converter device **24** and the rectifier device **14.** The converter device **24** may for instance be connected to the secondary winding of the transformer **23.** The converter device **24** may be connected to the same terminal and/or tap as the rectifier device **14** is connected to, or the converter device **24** may be connected to a separate terminal and/or tap of the transformer **23** and/or the AC voltage source **12.**

The safety circuitry **20** further comprises a trigger device **30** adapted for detecting an over-power in the supply line **16.** For this purpose, the trigger device **30** comprises an over-voltage detection device **32,** an over-current detection device **34** and/or an over-heat detection device **36** for detecting an occurrence of over-power in the supply line **16.** The fuse **22** is arranged between the rectifier device **14** and the trigger device **30.**

The safety circuitry **20** further comprises a crowbar device **26** with a MOSFET switch **28** adapted for grounding the supply line **16** if and/or when an over-power is detected by the trigger device **30.** A drain terminal of the MOSFET switch **28** is connected to the supply line **16,** the trigger device **30** as well as the converter device **24** are connected to a gate terminal of the MOSFET switch **28,** and a source terminal of the MOSFET switch **28** is connected to ground potential.

During normal operation of the power supply **10,** the MOSFET switch **28** and correspondingly the crowbar device **26** is switched off, i.e. switched to an off-state, in which no current may flow through the MOSFET switch **28** and/or from drain to source terminal of the MOSFET switch **28.**

If and/or when an over-power is detected by the trigger device **30,** the trigger device **30** generates a trigger signal for switching the MOSFET switch **28** to an on-state, which in turn provides a conduction path from drain terminal to source terminal, thereby connecting supply line **16** to ground potential and purging current from the supply line **16.** To keep the MOSFET switch **28** in the on-state, the converter device **24** supplies the DC control voltage **U_{c}** to the gate terminal of the MOSFET switch **28** until the fuse **22** is blown and main DC voltage **U₀** is reduced close to 0 V. Accordingly, the DC control voltage **U_{c}** refers to a gate-to-source voltage applied to the MOSFET switch **28.** In order to withstand a considerable amount of current flowing through the MOSFET switch **28,** a MOSFET switch **28** with a rather high drain-source current may be used.

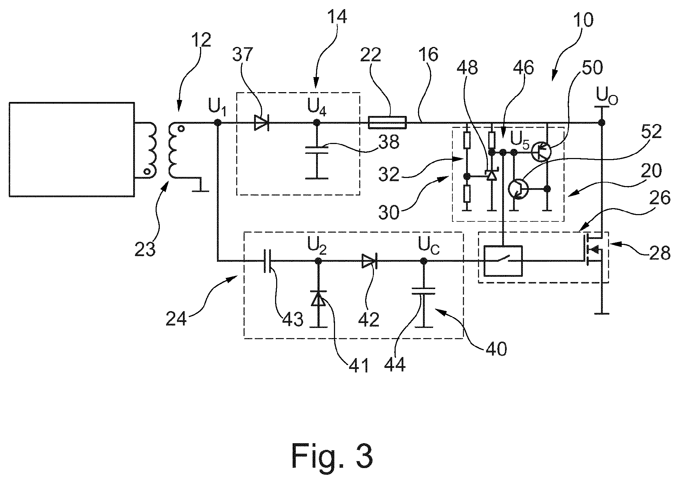

Fig. 3 schematically shows a functional diagram of a power supply **10** according to another embodiment of the invention. If not stated otherwise, the power supply **10** of Fig. 3 comprises the same elements and/or features as the power supply **10** of Fig. 2. The power supply **10** shown in Fig. 3 may refer to a fly-back converter with DC/DC topology.

The rectifier device **14** comprises a half bridge module **19** with a rectifier diode **37** and a rectifier capacitor **38.** Accordingly, the rectifier device **14** only rectifies positive pulses and/or positive half-cycles of the AC voltage supplied by the AC voltage source **12.**

The converter device **24** comprises a charge pump circuit **40** with a first diode **41,** a second diode **42,** a first capacitor **43** and a second capacitor **44.** By means of the charge pump circuit **40** the converter device **24** is capable of converting both a negative and a positive half-cycle and/or pulse of the AC voltage supplied by the AC voltage source **12.** This may ensure that the DC control voltage **U_{c}** would not be influenced after the crowbar device **26** and/or the MOSFET switch **28** is triggered. Further, since the rectifier device **14** only rectifies the positive half-cycles of the AC voltage, the negative half-cycle may advantageously be used for triggering the crowbar device **26.** Accordingly, an energy of a negative half-cycle should be sufficient to supply the DC control voltage **U_{c}** as gate-to-source voltage to the gate terminal of the MOSFET switch **28** to keep the MOSFET switch **28** in the on-state in case an over-power is detected by the trigger device **30.** This may be calculated taking a primary input voltage of the transformer **23** as well as a winding rate of the transformer **23** into account.

However, by means of the charge pump circuitry **40** also the positive pulses and/or positive half-cycles of the AC voltage may be used to generate the DC control voltage **U_{c}.** This may further increase a safety function provided by the safety circuit **20,** because also a single positive over-voltage pulse may occur and the charge pump circuit **40** allows using both polarities and/or directions of the AC voltage to generate and/or create the DC control voltage **U_{c}.**

Apart from that, the MOSFET switch **28** may have a high input impedance of the gate-source feature and/or the gate-source terminal. Thus, the charge pump circuit **40** may carry this load while the MOSFET switch **28** is triggered.

The trigger device **30** of Fig. 3 comprises an over-voltage detection device **32** with a voltage reference device **46** comprising a Zener diode **46** as well as a first transistor **50** and a second transistor **52.** By means of the voltage reference device **46** a trigger level for a voltage may be set, above which the crowbar device **26** may be triggered and/or above which the MOSFET switch **28** may be switched to the on-state. At least a part of the over-voltage protection device **32** may be regarded as a latch circuit. If the Zener diode **48** detects the voltage **U₄** occur overvoltage, the Zener diode **48** triggers the first transistor **50,** then first transistor **50** triggers the second transistor **52** so that these two transistors are self-latched. The crowbar device **26** keeps active to trigger switch **28** conducting until fuse **22** is blown.

The first transistor **50** may be a pnp transistor and the second transistor **52** may be a npn transistor, wherein an emitter terminal of the first transistor **50** is connected to the supply line **16,** a base terminal of the first transistor **50** is connected to a collector terminal of the second transistor **52** and a collector terminal of the first transistor **50** is connected to a base terminal of the second transistor **52.**

During normal operation of the power supply **10,** a voltage **U₄** referred to as rectifier output voltage is equal to a voltage **U₅** referred to as trigger input voltage to keep the first transistor **50** in an off-state, i.e. to keep the first transistor **50** switched off. Accordingly, the MOSFET switch **28** and/or the crowbar device **26** is also switched off.

If the rectifier output voltage **U₄** increases above a certain trigger level set by the voltage detection device **32** and/or the voltage reference device **46** and/or the Zener diode **48,** current is conducted through the Zener diode **48** and the trigger input voltage **U₅** is decreased to switch both the first transistor **50** and the second transistor **52** on. Further, the second transistor **52** pulls down a base voltage of the first transistor **50** to continuously switch on corresponding to a latch function and trigger the MOSFET switch **28.**

The MOSFET switch **28** is then kept in the on-state by the DC control voltage **U_{c}**. Before the fuse **22** is finally tripped and/or blown a positive peak voltage **U₁₊** of a secondary winding output voltage **U₁** drops to 0.7 V, which corresponds to the voltage drop of the rectifier diode **37.** At that moment the DC control voltage **U_{c}** should be still sufficient to keep the MOSFET switch **28** in the on-state, wherein **U_{c}** equals a converter voltage **U₂** minus a voltage drop of the second converter diode **42,** and the converter voltage **U₂** equals the sum of the positive **U₁₊** and negative peak voltages **U₁₋** of the secondary winding output voltage **U₁** minus a voltage drop of the first converter diode **41.**

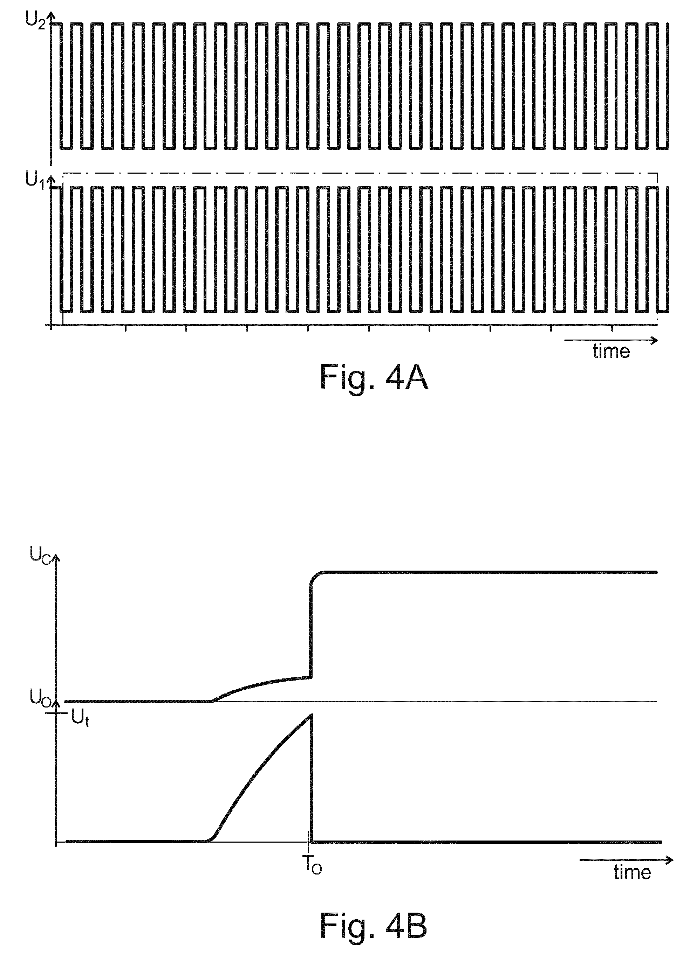

Figs. 4A and 4B each illustrate a working performance of the power supply of Fig. 3. In Fig. 4A the secondary winding output voltage **U₁** and the converter voltage **U₂** are shown as a function of time, respectively, in arbitrary units. As mentioned in the above, the converter voltage **U₂** equals the sum of the positive and negative peak voltages of the secondary winding output voltage **U₁** minus a voltage drop of the first converter diode **41.** Fig. 4B shows the DC control voltage **U_{c}** and the main DC voltage **U₀** as function of time in arbitrary units.

As evident from Fig. 4B, when the main DC voltage **U₀** reaches a certain trigger level **Uₜ** at a trigger time **T₀**, the DC control voltage **U_{c}** is still kept stable to keep the MOSFET switch **28** in the on-state, such that the main DC voltage **U₀** is clamped and reduced close to 0 V.

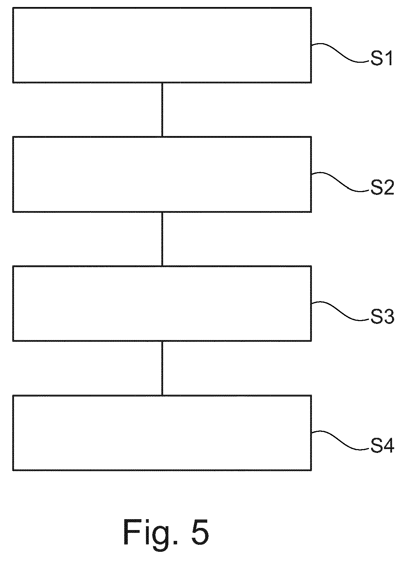

Fig. 5 shows a flow chart illustrating steps of a method for operating a power supply **10** according to an embodiment of the invention.

In a first step **S1** an AC voltage from the AC voltage source **12** is converted to the main DC voltage **U₀** by means of the rectifier device **14.**

Further, in a step **S2** the main DC voltage **U₀** is supplied to a load **18** via the supply line **16.**

In a step **S3** an over-power is detected by means of the trigger device **30** and a trigger signal for triggering the crowbar device **26** comprising the MOSFET switch **28** is generated.

In a further step **S4** an AC voltage from the AC voltage source **12** is converted to the DC control voltage **U_{c}**, and the DC control voltage **U_{c}** is supplied to the gate terminal of the MOSFET switch **28** to keep it in an on-state and to connect the supply line **16** to ground potential, such that the main DC voltage **U₀** is reduced close to 0 V.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### List of reference symbols

- 10: power supply
- 11: input terminal
- 12: AC voltage source
- 13: output terminal
- 14: rectifier device
- 15: switch element
- 16: supply line
- 17: further electrical line
- 18: load
- 19: bridge module
- 20: safety circuitry
- 21: filter device
- 22: fuse
- 23: transformer
- 24: converter device
- 25: rectifier module
- 26: crowbar device
- 27: filter element
- 28: MOSFET switch
- 30: trigger device
- 32: over-voltage detection device
- 34: over-current detection device
- 36: over-heat detection device
- 37: rectifier diode
- 38: rectifier capacitor
- 40: charge pump circuit
- 41: first diode
- 42: second diode
- 43: first capacitor
- 44: second capacitor
- 46: voltage reference device
- 48: Zener diode
- 50: first transistor
- 52: second transistor
- U0: main DC voltage
- UC: DC control voltage
- U1: secondary winding output voltage
- U2: converter voltage
- U4: rectifier output voltage
- U5: trigger input voltage
- Ut: trigger level
- T0: trigger time

## Claims

1. A Power supply (10), comprising:
an AC voltage source (12);
a rectifier device (14) connected to the AC voltage source (12) and to a supply line (16), which rectifier device (14) is adapted for converting an AC voltage to a main DC voltage (U₀) for supplying a load (18) via the supply line (16); and
a safety circuitry (20) for disrupting the supply line (16),
wherein the safety circuitry (20) comprises a fuse (22) arranged in the supply line (16), a converter device (24), a crowbar device (26) with a MOSFET switch (28) for grounding the supply line (16), and a trigger device (30) for detecting an over-power in the supply line (16) and for triggering the crowbar device (26) when an over-power is detected,
wherein the converter device (24) is connected to the AC voltage source (12) and adapted for converting an AC voltage to a DC control voltage (U_{c}) for keeping the MOSFET switch (28) in an on-state when triggered by the trigger device (30), such that the supply line (16) is grounded and the fuse (22) is blown.

2. The power supply (10) according to claim 1,
wherein the converter device (24) comprises a rectifier module (25) for converting an AC voltage from the AC voltage source (12) to the DC control voltage (U_{c}).

3. The power supply (10) according to one of claims 1 or 2,
wherein the converter device (24) comprises a filter element (27) for smoothing the DC control voltage (U_{c}).

4. The power supply (10) according to one of the preceding claims,
wherein the converter device (24) comprises a charge pump circuit (40).

5. The power supply (10) according to one of the preceding claims,
wherein, for generating the DC control voltage (U_{c}), the converter device (24) is adapted for converting a negative half-cycle and/or a positive half-cycle of an AC voltage provided by the AC voltage source (12).

6. The power supply (10) according to one of the preceding claims,
wherein the converter device (24) is adapted for supplying the DC control voltage (U_{c}) to a gate terminal of the MOSFET switch (28).

7. The power supply (10) according to one of the preceding claims,
wherein the AC voltage source (12) is a common voltage source (12) for supplying an AC voltage to the rectifier device (14) and to the converter device (24).

8. The power supply (10) according to one of the preceding claims,
wherein the AC voltage source (12) comprises a transformer (23).

9. The power supply (10) according to claim 8,
wherein the converter device (24) and/or the rectifier device (14) is connected to a secondary winding of the transformer (23).

10. The power supply (10) according to one of the preceding claims,
wherein the rectifier device (14) comprises a half bridge module (19) and/or a full bridge module (19).

11. The power supply (10) according to one of the preceding claims,
wherein the rectifier device (14) comprises a filter device (21) for smoothing the main DC voltage (U₀).

12. The power supply according to one of the preceding claims,
wherein the trigger device (30) comprises an over-voltage detection device (32), an over-current detection device (34), and/or an over-heat detection device (36).

13. The power supply (10) according to one of the preceding claims,
wherein the trigger device (30) comprises an over-voltage detection device (32); and
wherein the over-voltage detection device (32) comprises a voltage reference device (46) and/or at least one Zener diode (48).

14. The power supply (10) according to one of the preceding claims, wherein the trigger device (30) comprises a latch-circuit; and/or wherein the trigger device (30) comprises at least two transistors (50, 52).

15. A method for operating a power supply (10), the method comprising:
converting, by means of a rectifier device (14), an AC voltage from an AC voltage source (12) to a main DC voltage (U₀);
supplying the main DC voltage (U₀) via a supply line (16) of the power supply (10) to a load (18);
detecting, by means of a trigger device (30), an over power and generating a trigger signal for triggering a crowbar device (26) comprising a MOSFET switch (28);
converting an AC voltage from the AC voltage source (12) to a DC control voltage (U_{c}) and supplying the DC control voltage (U_{c}) to a gate terminal of the MOSFET switch (28), thereby connecting the supply line (16) to a ground potential.
